# EUROPEAN PATENT APPLICATION

(11) **EP 0 839 712 A2**
(43) Date of publication of application: **06.05.1998**
(21) Application number: 97830546.4
(22) Date of filing: 27.10.1997
(51) Int. Cl.: B64C 37/00

(54) **Aircraft convertible into other aircrafts and into a trailer for motor vehicles**

(30) Priority: 28.10.1996 IT BN960002
(71) Applicant: Perrotta, Pasquale Vittorio, 82010 Paolisi (Benevento) (IT)
(72) Inventor: Perrotta, Pasquale Vittorio, 82010 Paolisi (Benevento) (IT)

(57) **Abstract**

Aircraft with changeable geometry, height, weight (and also changeable carriage wheels' distance) on the ground or during flight, furnished with one or more engines mounted in the same frame and convertible into a trailer for motor vehicles. These characteristics are obtained thanks to: mechanical units mounted on the fuselage that allow fixed movements to some portions of the fuselage; adjustable front carriage's leg (4001), which can change its inclination, its length and its shape; carriage's rear portion (5000) formed by two half wings, whose roots are connected to the fuselage and their longitudinal ends to the wheels; engine casing (6001) of many shapes and sizes where various kinds of engines can be placed; fuselage's plate (6003) on which the engine casing can be placed in different positions; beams (7001 and 7004) that can be introduced in the fuselage to change the aircraft into a trailer for motor vehicles or into other types of aircrafts.

## Description

The purpose of the invention is to utilize the structure of the aircraft to realize other aircrafts with different characteristics and to turn the above mentioned aircraft into a trailer for motor vehicles.

These results are obtained thanks to a considerable number of innovations carried out on the structure of the aircraft, that allow to change its center of gravity, the height, the length, the number of engine propellers, its aerodynamics and to add or to take out definite structures and organs useful for the transformation. These characteristics and others will be more evident taking in consideration an executive model given as an example, of a craft furnished with the mentioned improvements, using the enclosed drawing.

With the letter "A" are indicated the components relative to the first characteristic, useful to realize the piece of the structure of the fuselage where the wing is connected to the body of the aircraft. This structure id divided into two parts, united by an articulated joint and by a transmission that allow to vary the geometry of the structure and the center of gravity of the aircraft which brings a change in the position (of the structure) of the wing, in relation to the remaining portion of the craft and also a change of the value of the lift.

The purpose of this characteristic is to be able to change and to regulate continuously, during the flight, the keying angle and the inclination (Angle α) of the wing profile of an aircraft with consequent variation of the value of the wing's lift and the minimum velocity of the craft. These and other purposes will be clarified in the following text.

On the traditional aircrafts the basic bearing structure or the fuselage frame, on which the wing and the remaining parts are installed, is rigid, without joints and only installing a mechanic organ between the wing and the basic bearing structure or fuselage frame, it is possible to have controlled movements of the wing in relation to the remaining portion of the aircraft.

With the innovations that we are about to examine, it is the fuselage's frame that permits the movement of the wing, allowing a great number of adjustments between the dive position and the nose-up position, useful only in particular flight conditions.

In fact, in the dive position the wing is flatter, more air cutting, forcing to have a greater velocity V to obtain the lift necessary to hold the aircraft up and to support the aircraft's weight P applied to the wing; this position compels to have a greater power from the propeller with consequent greater thrust in order to be able to land or to take off with this wing position; as a consequence of the higher velocity of the aircraft it is requested also a bigger space to obtain this velocity when taking off and to brake when landing.

In the nose-up position (contrary to the preceding one) because of the greater wing lift and the lower velocity necessary to generate the force F of the lift, there is a need to have less thrust from the engine propeller, and in this position, the space necessary to take off and to land is smaller, because it is smaller the velocity necessary to take off and it is smaller the space necessary to stop the plane during the landing phase.

The flying cruising velocity is low.

These and other inconveniences are avoidable with a device that allows the regulation of the position of that part of the fuselage's structure where the wing is attached and the also to change the keying angle and the wing profile in relation to the remaining part of the aircraft, and also the value of the lifting force.

Substantially the device includes the basic bearing structure or the fuselage framework of the aircraft with an articulated joint near the wing coupling and a transmission controlled during the flight, which changes the fuselage framework and therefore the keying angle and the wing profile around the joint.

The regulation can be a direct angular regulation or a longitudinal movement that moves the structure where the wing is mounted to the remaining part of the fuselage, modifying the angular adjustment of the wing structure.

The transmission works with a servomotor, but it can also work manually driven by the operator during the flight.

The transmission can also be the irreversible kind, to block the wing structure in the desired position; for example it can be made up of a bevel gear unit, or a worm gear unit, or a spur gear unit or an hydraulic transmission or a double effect cylinder and a pump, or a jack.

Alternatively a servomotor transmission can behave as a self braking motor.

Whatever solution one chooses, it is necessary to have two stopping brakes to stop the run , angular or longitudinal, along which the fuselage structure and the wing structure can be moved by the transmission.

The mechanism will be better understood following the description and the enclosed drawing, which shows a practical exemplification of the device.

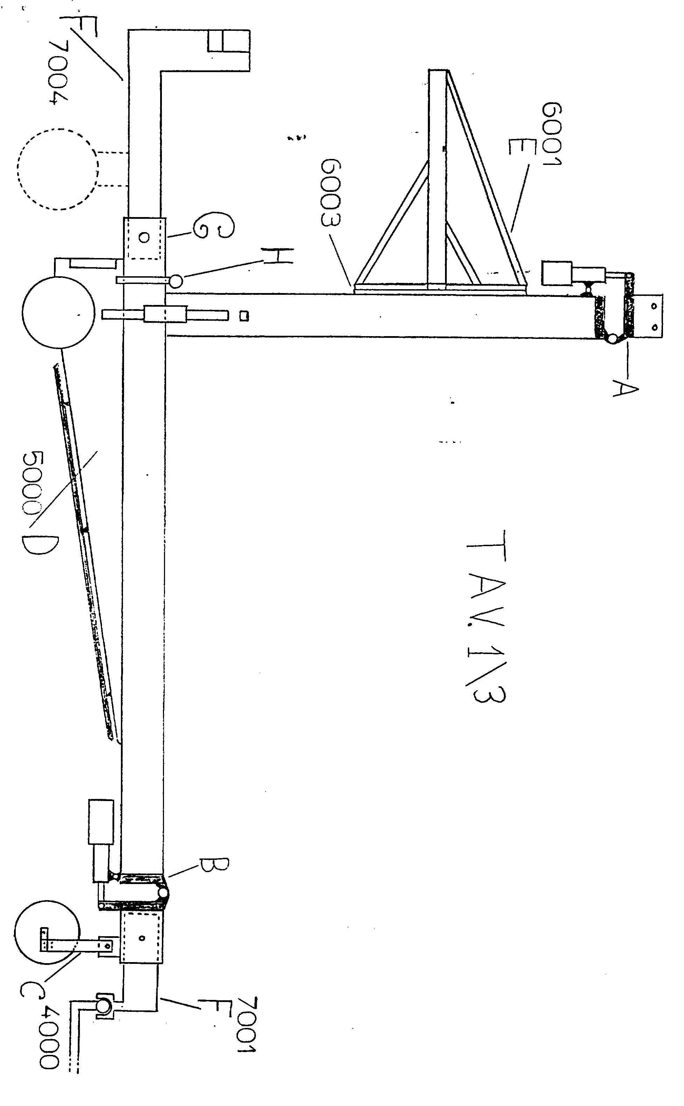

On the drawing, fig. 1A shows that portion of the basic bearing structure or traditional fuselage framework where the wing is installed. It is represented as a beam (in fact it can have various shapes and sizes, according to the type of aircraft).

Figures 2A and 3A show schematically the two end positions reached by the device, the dive position and the nose-up position.

Fig. 4A shows a particular realization with a servomotor that drives the transmission for the angular adjustments.

According to the drawing, in the traditional solution (Fig. lA) the number 2010 indicates that portion of the fuselage framework where the wing is set up. The wing is indicated with the number 2013.

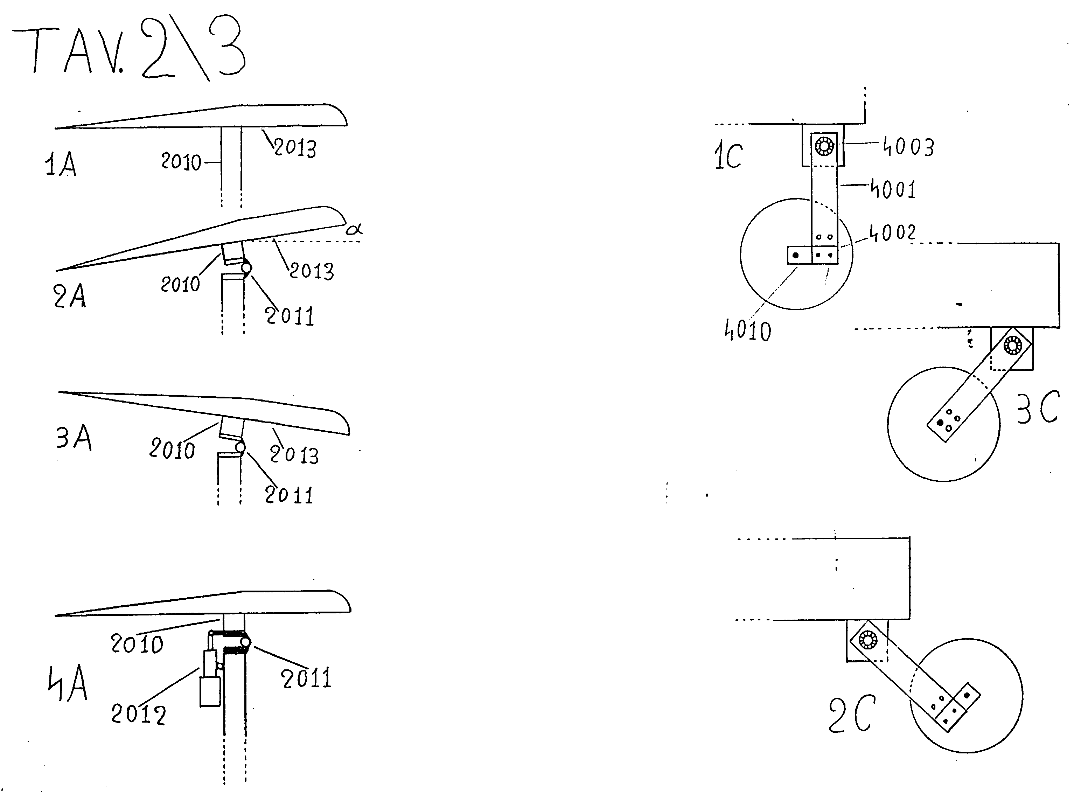

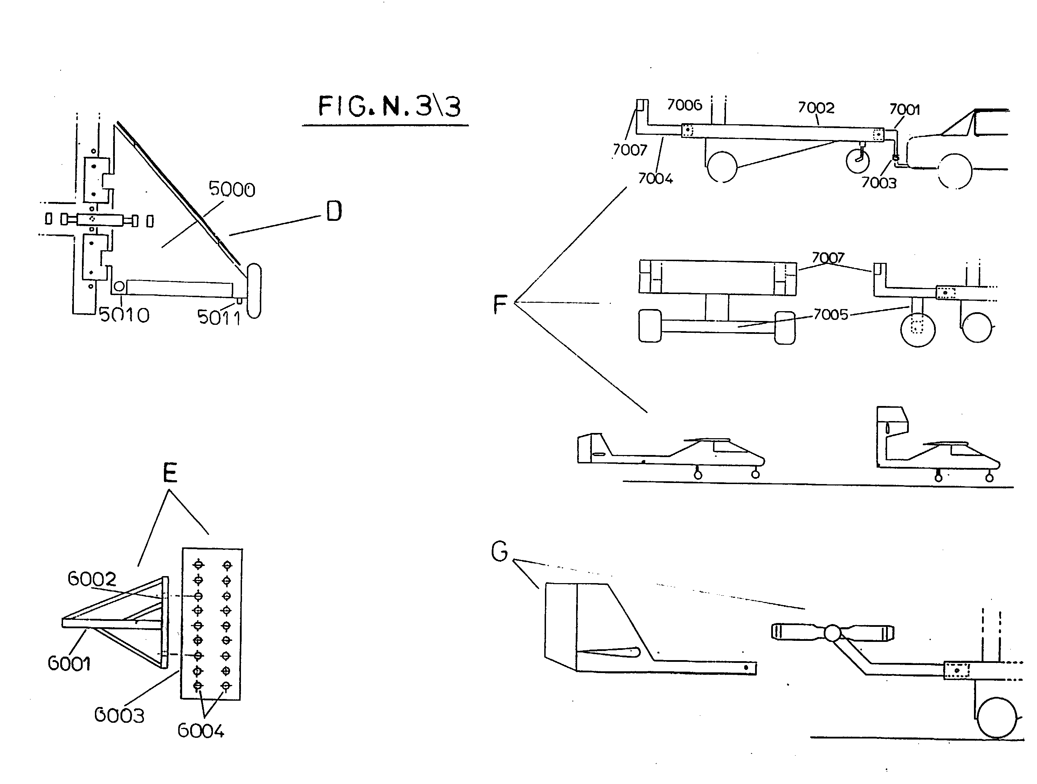

This structure can have different shapes and sizes and in the figure it is shown as a single beam, without articulated joints and without movements so that the wing cannot change its position. In the schematic drawing of the invented device, shown in figures 2A and 3A, the same structure is recalled with the same references of Fig. 1A. This structure is realized with a joint 2011 that allows the movement of the structure 2010 where the wing 2013 is mounted, the movement is obtained by a mechanic organ 2012 which can be a mechanical transmission driven by an engine or a manually driven transmission. There can be another solution, where the transmission that allows the movements of the structure can be controlled only on the ground, manually, and not in flight, hence it cannot be regulated continuously and has the only advantage to better adapt the wing to the aircraft, because one can choose among different positions, from the nose dive position to the nose-up position hence choosing the flying velocity.

All this can be achieved substituting the mechanic organ 2012 with a threaded tightener. In figures 2A, 3A and 4A, the regulation is, in first place, defined in flight and not only on the ground, and in second place it is continuous, with many different adjustments. The desired position can be maintained blocking the transmission or using a irreversible kind of transmission, or blocking the servomotor.

In fig. 4A , 2010 indicates that portion of the fuselage structure where the wing is set up, 2011 shows the joint in one of its many arrangements which allows the movement of the wing, and 2012 indicates the transmission in one of its possible locations. This mechanical device has the function of moving the structure where the wing is mounted; it can have many sizes and shapes according to the type of transmission, the type of engine or in relation to some other organ necessary to generate the movement. Instead of a servomotor, a mechanical transmission can be used, starting from a manually working system used by the pilot.

On the aircrafts furnished with this mechanism, however, there is always the possibility to make flight adjustments with traditional maneuvering organs and it is also possible to choose the wing position on the ground, as in the traditional way.

The purpose of the second characteristic is to be able to bring adjustments to the arms of the wheel's fork (which are components of the front carriage), both in height and in length and the same fork can be placed forward or backward (changing thus the wheels' distance and the height from the ground of the aircraft ), adapting it to the many weight and shape variations.

The metal plates which are mounted on the wheel's axis can be mounted in many positions in the lower part of the fork's arms, obtaining in this way two new things; one is the adjustment of the height from the ground of the front fuselage, the other is to be able to choose the wheel's placement in relation to the fork's position: forward, backward or, eliminating the metal plates, in the center.

The fork's position can be regulated because the arms in the upper position are located at the ends of a splined shaft of a single shock absorber or clutch claws which allow the arms to be mounted in many positions on the shaft axis connected with the fuselage. The characteristic of the device will be better understood following the description and the annexed drawing.

In the main drawing, fig. 1C shows the front carriage's leg with the wheel mounted in the backward position in relation to the fork; fig. 2C shows the wheel in a forward position and fig. 3C shows the wheel in a central position. These three possible placements allow to better suit the carriage's leg to the weight and shape of the aircraft.

In figures 1C, 2C and 3C, 4001 represents on of the two fork arms, 4002 is the lower part of the arm with four slots to regulate in height and in the forward and in the backward positions the plate (or tubular), 4010, which is mounted with screws or bolts on part number 4002.

The wheel, besides the fact that it can be mounted on the plate 4010 in one of the two positions (forward position as in fig. 2C or backward position as in fig. 3C), can also be assembled directly in one of the slots on the arm indicated as 4002.

The number 4003 indicates the upper part of the arm which is connected to one end of the shock absorber's shaft using grooved junctions or frontal cogs that, depending upon the number of teeth or hollow spaces allow a fixed number of positions of the arm on the shock absorber's shaft.

The third characteristic concerns the engine casing which can have many shapes and dimensions depending upon the shape of the engine or engines installed. It can be dismantled from the remaining portion of the aircraft in order to substitute it with another one capable to hold other different engines.

The purpose of this is to be able to set up any type of engine propeller on the aircraft or even more than one.

The fourth characteristic concerns the fuselage plate where the engine casing is located. On the plate there are several slots that make possible to change the engine casing position modifying thus the center of gravity and the position of the engine propeller. These characteristics will be better understood following the description and the alleged drawing.

Figure E shows the engine casing in one of its possible shapes and the fuselage's plate where it is fastened. The casing is indicated with the number 6001 and it is connected to the plate 6003 by means of screws or bolts, 6002. On the plate, the slots are indicated with the number 6004. This allows to change the engine casing position on the fuselage depending upon the weight and the number of engines installed.

The fifth invention is the possibility to convert the aircraft's structure into a trailer for automobiles, for road hauling. The change is obtained introducing two beams and several mechanical organs in the front and backward portions of the fuselage.

The beam introduced in the front part of the fuselage has a hook at one end which is connected with the automobile, while at the other it has several expedients to block the beam in its place, like slots for screws or bolts. The beam on the backward portion of the fuselage can have two different shapes and sizes depending upon the type of change one has to make, which depends on whether the aircraft has brakes on the back wheels and whether these can be connected to the motor vehicle or not. The beam has on one end a panel with turning signals and stop lights, and on the other end it has some device to block it to the fuselage, like the front beam.

If the aircraft does not have rear brakes or these cannot be connected to the car, the beam has an axle with two wheels at the ends furnished with brakes that can be connected to the automobile. Introducing this beam in the fuselage, one can lift up the backward portion of the aircraft along with the back carriage wheels, thus transferring the craft's weight from the carriage wheels to the wheels on the axle of the beam.

All of this will be better understood following the description and the alleged drawing.

Figure F shows the two fuselage extremes where the beams are introduced. The number 7001 indicates the beam that goes into the front fuselage, 7002, which has at the other end a tow hook, 7003, that can be connected to the automobile. The number 7004 indicates the beam that goes in the back portion of the fuselage, indicated with the number 7006; the beam can be laid on an axle with wheels, indicated as 7005 which supports the weight and having a set of brakes that can be connected to the automobile's brakes (if the aircraft already has backward brakes that can be connected to the automobile, the beam 7004 may not have the axle and the wheels). At the other end, the beam is furnished with a panel with all the necessary signals and lights according to the road safety laws. This description works well when the changes are applied on an aircraft with a front tricycle carriage. When the aircraft has a back tricycle carriage, the change can be made by introducing the beam 7001 in the back portion of the fuselage and the beam 7004 or the beam 7005 in the front portion of the fuselage if the wheels do not have brakes that can be connected to the automobile. The beams just mentioned (7001, 7004, 7005) work the same way as described earlier.

Another way to realize this characteristic is to furnish the structure with the axle with shock absorbers, located between the axle extremes and the wheels or between the axle and the structure introduced to the rear fuselage. Another way is to have the same structure behaving as a shock absorber. In every way, the purpose is to bring improvements when trailing the aircraft on the road.

In another kind of realization of the aircraft, the mechanical members useful for the conversion into a trailer can be mounted fixedly and be therefore integral part of the fuselage, or they can be partially fixed and partially detachable. When the members are fixed, they are introduced in the aircraft and are pulled out when there is need to hook up the aircraft for road trailing. Sometimes, when the excessive length of the fuselage does not allow the conversion into a trailer (according to the road safety laws), it is possible to install one or more mechanical joints, which can rotate that part of the fuselage where the tail surfaces are placed, in order to overlay it to the remaining part of the fuselage.

The sixth characteristic is the transformation of the rear portion of the aircraft. Because of a cavity or a housing in the fuselage rear end, which is needed to introduce the beam that changes the aircraft into a trailer (as described earlier), it is also possible to introduce or to take away a beam with tail surfaces that together with the possibility to change wing, can convert an airplane into a motor hang glider and vice versa or to change an autogiro into a motor hang glider or to convert an airplane into an autogiro or helicopter, or an aircraft with one tail into an aircraft double tailed. Practically this characteristic allows to use the fuselage, the engine propeller and the carriage, without changing them, on many kinds of aircrafts and to convert them into other aircrafts very easily.

The drawing "G" is only an exemplification of the device, which can vary in shapes and sizes.

The seventh characteristic uses the empty space inside the rear structure of the carriage (which might have the shape of two half wings) as a muffler and a silencer or simply as a silencer or as a fuel tank or as a radiator. In fact, internally the half wings are empty and this space can be used as channels for the exhaust gases that come from the engine, lowering its noise.

This characteristic allows to use the same structure for many purposes, as a rear portion of the carriage, as wings to have greater lift, as muffler or silencer or as a fuel tank. Near the wing's root there is an opening which allow the exhaust gases, 5010 (fig. D), to enter into the half wing, and to go out through the exit border 5011 (fig. D). All of this reduces the aircraft's weight and the noise of the exhaust gases.
Obviously the drawings used to describe all the characteristics are only exemplifications given as practical demonstrations of the inventions, which can vary in shapes, dimensions and arrangements, without altering the concept for which they are made.

## Claims

1. Aircraft with the device used to regulate the position of the fuselage's structure where the wing is attached, in order to change the wing's profile and the keying angle in reference to the aircraft, and also to change the value of lift. The mechanism's peculiarity is that it has a transmission driven by a servomotor (controlled by the operator on the ground or during flight time) of the irreversible kind, with self braking mechanism to block the structure once at reaches the desired position modifying that portion of the structure and the shape of the fuselage (over which the wing is installed) next to one or more articulated joints working between two fuselage structure's parts, allowing a longitudinal and an angular movement of the wing.

2. Aircraft with the device as claim (1), characterized by the fact that the transmission can be regulated between two stopping brakes and can be made up by a bevel gear unit, or a worm gear unit, or a spur gear unit or an hydraulic transmission or a double effect cylinder and a pump, or a jack, and can be substituted by a threaded tightener manually or mechanically driven.

3. Aircraft with device used to change the length and the inclination of the carriage's front leg and to vary the wheel's position in reference to the leg, characterized by the fact that the wheel can be assembled in different positions on the fork's arms because of several bolt or screw slots which allow to change the position of the metal plate (or tubular part) where the wheel is set up, and even the same wheel's position that can be mounted by means of screws and bolts in a forward or backward position in reference to the fork's arms that make up the carriage's front leg; the wheel's axle can be mounted directly into the housings on the fork's arms. The fork's arms which make up the carriage's front wheel are mounted at the ends of a splined shaft of a single shock absorber or clutch claws which make possible to vary the leg's position in reference to the fuselage.

4. Aircraft with device characterized by the fact that different engine casing can be mounted on it, having different shapes and dimensions, and capable to hoist different kinds of engine propellers, or even more than one thanks to the fact that the engine case has several screw or bolt housings or silentbloc in order to mount it on the pierced plate located on the fuselage. This pierced plate on the fuselage has several bores at different height to better adjust the assembly of the engine casing on the aircraft, thus changing the engine's position as well as the center of gravity of the aircraft.

5. Aircraft with device used to convert the aircraft's structure into a trailer, or an automobile's supplement to be able to move on the roads characterized by the fact that the conversion into a trailer occurs by introducing or hooking up, on the rear and front portion of the fuselage, some structures (beams, for examples) which have mechanical organs to hook up to motor vehicles and are also furnished with panels on which there are turning signals, lights or number plates, according to the rules of the road; if the craft needs brakes on the wheels and these are not installed or they cannot be connected to the motor vehicles, this structure (beam) is provided with an axle which has at the ends wheels furnished with brakes which can be connected to the motor vehicles. Introducing or hooking up this structure to the fuselage it is possible to lift the aircraft and the carriage's wheels, moving the weight on the new placed wheels at the end of the axle. This characteristic can be applied to any kind of fuselage, independently on the kind of aircraft's carriage.

6. Aircraft with device as mentioned in claim number (5), characterized by the fact that the mechanical organs useful for the transformation into a trailer can be mounted fixedly and be therefore integral part of the fuselage, or they can be partially fixed and partially detachable; When the members are fixed, they are introduced in the aircraft and are pulled out for the transformation into a trailer.

7. Aircraft with device as mentioned in claim number (5 and 6), characterized by the fact that it can have one or more mechanical joints, which can rotate that part of the fuselage where the tail surfaces are placed, in order to overlay it to the remaining part of the fuselage.

8. Aircraft with device as claims (5 and 6) characterized by the fact that the structure is furnished with an axle with shock absorbers, located between the axle extremes and the wheels or between the axle and the structure, introduced to the rear fuselage, or in another kind of realization, it is the same structure that behaves as a shock absorber. In every way, the purpose is to bring improvements when trailing the aircraft on the road.

9. Aircraft with device characterized by the fact that it is possible to change the rear portion of the fuselage obtaining thus an aircraft different from the starting one. This can be accomplished using the slots or housings on the fuselage mentioned in claim number 5, that allow to set up or to dismantle some structures furnished with definite organs, like: tail surfaces or a restoring torque propeller, making it possible (after substituting the structures) the transformation of an airplane into a motor hang glider and vice versa or to convert an autogiro into a motor hang glider or to convert an airplane into an autogiro or helicopter or vice versa, or an aircraft with one tail into an aircraft double tailed. This allows to utilize the same fuselage, the same engine propeller, the same carriage on many kinds or aircraft and to convert these into others very easily.

10. Aircraft with device characterized by the fact that it is possible to use the empty space inside the rear structure of the carriage (that might have the shape of two half wings), as a muffler and a silencer or simply as a silencer or as a fuel tank or as a radiator: this is possible because of the existence of openings on the roots and at the wing ends which allow the going in or the exit of fluids across the half wings.
